# EUROPÄISCHE PATENTSCHRIFT

(11) **EP 4 667 671 B1**
(45) Veröffentlichungstag und Bekanntmachung des Hinweises auf die Patenterteilung: **05.08.2026**
(21) Anmeldenummer: 25178201.7
(22) Anmeldetag: 22.05.2025
(51) Int. Cl.: E04B 1/76, F16B 13/00, F16B 35/06, F16B 35/02

(54) **BEFESTIGUNGSSYSTEM FÜR BAUTEILE AN EINEM TRAGENDEN UNTERGRUND**
FASTENING SYSTEM FOR COMPONENTS ON A SUPPORTING BASE
SYSTÈME DE FIXATION POUR COMPOSANTS SUR UN SOUS-SOL PORTEUR

(30) Priorität: 17.06.2024 DE 102024116928
(43) Veröffentlichungstag der Anmeldung: 24.12.2025
(73) Patentinhaber: RANIT-Befestigungssysteme GmbH, 45701 Herten (DE)
(72) Erfinder: Gräwe, Bernd, 45701 Herten (DE); Giertulla, Roger, 44651 Herne (DE)
(74) Vertreter: Kohlmann, Kai

(56) Entgegenhaltungen:
- EP-B1- 3 101 188
- DE-A1- 102009 044 352
- DE-A1- 19 745 296
- DE-A1- 3 321 623
- US-B1- 6 308 483

## Beschreibung

Die Erfindung betrifft ein Befestigungssystem für Bauteile an einem tragenden Untergrund, insbesondere zur Befestigung von isolierendem Dämmstoff, umfassend
- einen Schaft mit einer oberen und einer unteren Stirnseite,
- einen an der oberen Stirnseite des Schaftes angeordneten, rotierend antreibbaren Halteteller mit einer Ober- und Unterseite,
- ein in dem tragenden Untergrund verankerbares Befestigungselement, wobei das Befestigungselement drehfest mit dem Schaft verbunden ist und
- mindestens ein an der unteren Stirnseite des Schaftes angeordnetes Schneidelement.

Unter dem Begriff "tragender Untergrund" wird neben Fassadenwänden auch jede Art von Unterkonstruktion verstanden, auf die Bauteile, insbesondere Leichtbauteile, wie Schaumstoffkörper und wärme- bzw. schallisolierende Materialien, in Form von Platten, Paneelen, Leisten usw. montiert werden.

Derartige Befestigungssysteme finden insbesondere Verwendung zur Montage von Wärmedämm-Verbundsystemen zur Isolation, insbesondere bei Sanierungs- oder Renovierungsmaßnahmen von Gebäuden. Hierbei wird üblicherweise eine Isolierschicht, beispielsweise aus Polysterolplatten oder aus hochverdichteten Steinwolleplatten, auf das Mauerwerk geklebt, hier verdübelt sowie anschließend verputzt.

Problematisch ist der Einsatz von zunehmend härteren Dämmstoffen, wie beispielsweise Dämmstoffplatten aus extrudiertem Polystyrol (XPS) oder Holzweichfaser:
Die XPS-Platten haben eine geschlossene Zellstruktur, die verhindert das Wasser aufgenommen wird und sorgt dafür, dass das Material dauerhaft seine isolierenden Eigenschaften behält. Zudem ist die Druckfestigkeit sehr hoch und der Dämmwert deutlich höher als von EPS (Styropor)-Platten.

Holzweichfaserplatten sind eine Art von Naturbaustoff, die aus den Fasern von Nadelhölzern hergestellt werden. Sie sind besonders dicht und verfilzen aufgrund der Zerfaserung, was zu einer guten Dämmwirkung führt. Sie eignen sich für die Wärmedämmung von Gebäuden und lassen sich aus nachhaltiger Waldwirtschaft herstellen.

Zum Aufweiten der Bohrung zur Aufnahme des Schaftes des Befestigungssystems für die Dämmstoffplatten ist nach dem Stand der Technik grundsätzlich der Einsatz eines Stufenbohrers erforderlich.

Ein Befestigungssystem, das einen Stufenbohrer erfordert, ist beispielsweise aus der EP 2 547 703 B1 bekannt.

Die DE 197 45 296 A1 offenbart ein Befestigungssystem für Bauteile an einem tragenden Untergrund, bei dem an der unteren Stirnseite des mit einer Kopfplatte verbundenen Schaftes zwei diametral gegenüberliegende, schneidenförmige Räumvorsprünge angeordnet sind, die das Material, insbesondere bei einem drehenden Eindrücken des Haltetellers, nach Art eines Fräsers zerkleinern und gleichzeitig beiseite räumen. Dieses Befestigungssystem ist insbesondere für spröde, wenig feste mineralische Dämmplatten aus geschäumtem Leichtbeton vorgesehen. Die beiden Räumvorsprünge stehen nicht über die zylindrische Außenkontur des Schaftes hinaus. Zusätzliche schneidenförmige Räumvorsprünge können an der Unterseite der Kopfplatte angeordnet sein, die einstückig mit dem Schaft ausgebildet ist. Die DE 197 45 296 A1 (DENNERT KG VEIT [DE]) offenbart alle Merkmale des Oberbegriffes der Ansprüche 1, 6 und 9.

Ausgehend von diesem Stand der Technik liegt der Erfindung die Aufgabe zugrunde, ein Befestigungssystem für Dämmstoffe an einem tragenden Untergrund zu schaffen, das insbesondere auch bei der Befestigung von härteren Dämmstoffen den Einsatz eines Stufenbohrers entbehrlich macht, wobei beim Einbringen des Befestigungssystems die Reibung weiter reduziert und ein ungestörter Abtransport des zerspanten Materials gewährleistet werden soll.

Diese Aufgabe wird durch ein Befestigungssystem mit den Merkmalen der unabhängigen Ansprüche 1, 6 und 9 gelöst. Vorteilhafte Ausgestaltungen der Erfindung ergeben sich aus den Merkmalen der abhängigen Patentansprüche.

Die Erfindung beruht auf dem Gedanken, mindestens ein Schneidelement an der unteren Stirnseite des Schaftes anzuordnen. Das mindestens eine Schneidelement macht den Stufenbohrer für die Erstellung des Bohrlochs zur Aufnahme der Schraube und des Schaftes des Befestigungssystems entbehrlich.

Vorzugsweise sind an der unteren Stirnseite des Schaftes mehrere Schneidelemente, beispielsweise vier Schneidelemente in gleichmäßigem Winkelabstand um die Austrittsöffnung des Durchgangs herum angeordnet. Durch die höhere Anzahl der Schneidelemente wird die Schneidleistung verbessert.

Dadurch, dass zusätzlich an der Mantelfläche des Schaftes mindestens ein Schneidelement angeordnet ist, vorzugsweise mehrere Schneidelemente, kann die Reibung zwischen Schaft und Dämmstoff beim Einbringen des Befestigungssystems weiter reduziert werden. Zugleich begünstigen die an der Mantelfläche angeordneten Schneidelemente den Abtransport des zerspanten Materials in Richtung des Haltetellers. Das mindestens eine Schneidelement kann beispielweise gradlinig, d. h. parallel zur zentralen Längsachse des Schaftes, jedoch auch als Schraubenlinie um die Mantelfläche des Schaftes gewunden verlaufen.

Bei einer derartigen Wendelschneide erfolgt der Abtransport des von dem mindestens einen stirnseitigen Schneidelement zerspanten Materials nach dem Prinzip der archimedischen Schraube. Das Prinzip der archimedischen Schraube beruht darauf, dass sie mittels ihrer kontinuierlichen schraubenförmigen Geometrie Schüttgüter durch Drehung von einem niedrigeren zu einem höheren Niveau befördert. Das von dem mindestens einem an der unteren Stirnseite des Schaftes angeordneten Schneidelement zerspante Material wird durch die an dem Schaft angeordnete kontinuierlich gewundene wendelförmige Schneide in Richtung der oberen Stirnseite des Schaftes zu den Durchtrittsöffnungen im Halteteller transportiert, wo das zerspannte Material aus dem Befestigungssystem austritt.

Sofern das Schneidelement als Schraubenlinie verläuft und der Durchmesser des Schneidelements in Richtung der unteren Stirnseite des Schaftes, d.h. in Eintreibrichtung des Befestigungssystem abnimmt, wird das Drehmoment zum Eintreiben des Befestigungssystems weiter reduziert.

Im Interesse eines ungestörten Abtransportes des zerspanten Materials in Richtung des Haltetellers erstreckt sich jedes an der Mantelfläche angeordnete Schneidelement über die gesamte Länge des Schaftes, d. h. von der unteren Stirnseite des Schaftes bis zur Unterseite des Haltetellers.

Um das zerspante Material beim Einbringen des Befestigungssystems abfördern zu können, weist der Halteteller mindestens eine, vorzugsweise mehrere gleichmäßig über den Umfang verteilte Durchtrittsöffnungen auf, deren Größe und Anordnung derart bestimmt sind, dass das zerspante Material an der Oberseite des Haltetellers ungehindert austreten kann.

Um bei einer versenkten Montage des Haltetellers in dem Dämmstoff die Reibung zwischen Halteteller und Dämmstoff zu verringern, ist in einer vorteilhaften Ausgestaltung der Erfindung zusätzlich mindestens ein Schneidelement an der Unterseite des Haltetellers angeordnet. Das mindestens eine Schneidelement fräst beim drehenden Einbringen des Befestigungssystems den Setzkanal für den Halteteller in den Dämmstoff. Dies ist insbesondere bei harten Dämmstoffen von Vorteil und oder bei Dämmstoffplatten auf die ein Vorputz oder ein Gewebe aufgebracht ist. Bei herkömmlichen, weicheren Dämmstoffplatten entstehen durch die Schneidelemente keine Nachteile.

Um das Fräsen des Setzkanals weiter zu verbessern, sind vorzugsweise mehrere Schneidelemente an der Unterseite des Haltetellers angeordnet. Jedes Schneidelement ist vorzugsweise in radialer Richtung ausgehend von dem mittig an der Unterseite des Haltetellers ansetzenden Schaft angeordnet.

Wie bei derartigen Befestigungssystemen üblich, ist das Befestigungselement vorzugsweise als eine einen Mehrkantkopf aufweisende Schraube ausgebildet. Die Schraube kann entweder unmittelbar in den Untergrund, beispielsweise aus Holz, oder in einen Dübel eingeschraubt werden.

Als problematisch beim Einsatz der bekannten Befestigungssysteme hat sich der nach dem Einsetzen in das vorgefertigte Bohrloch mit nicht vorherbestimmbarer, unterschiedlicher Länge mit seinem oberen Dübelende in den Dämmstoff vorkragende Dübel herausgestellt. Das Befestigungselement bzw. die Schraube kann bei der Montage des Befestigungssystems mitunter nicht ausreichend tief in den Spreizbereich des Dübels eindringen.

Um dieses Problem zu lösen, weist in einer ersten Ausführungsform der Erfindung ein als Hubkanal ausgebildeter Abschnitt des Durchgangs in dem Befestigungssystem einen an den Mehrkantkopf der Schraube formangepassten Querschnitt auf, so dass mit der Rotation des Haltetellers der Mehrkantkopf und damit die Schraube teleskopartig entlang des Hubkanals innerhalb des Durchgangs nach unten verschiebbar gelagert ist. Die Schraube wird hierdurch drehfest, jedoch teleskopierbar mit dem Schaft des Befestigungssystems verbunden. Der Hubkanal erstreckt sich von der Oberseite des Haltetellers bis zu dem Anschlag innerhalb des Durchgangs.

Bevorzugt weist der Mehrkantkopf einen rechteckigen, vorzugsweise quadratischen Querschnitt auf, wenn die Schraube in Längsrichtung betrachtet wird. Hierdurch wird es nicht nur ermöglicht, hohe Drehmomente auf die Schraube selbst aufzubringen; durch die komplementäre Ausgestaltung des Querschnitts des Durchgangs in dem Hubkanal wird zugleich bewirkt, dass die auf die Schraube aufgebrachten Drehmomente vollständig auf den Schaft und den Halteteller übertragen werden.

Der Schraubenkopf kann unmittelbar eine Werkzeugaufnahme für ein Montagewerkzeug aufweisen, um die Schraube in den Dübel bzw. unmittelbar in den Untergrund einzudrehen.

In einer Ausgestaltung der Erfindung mit Hubkanal ist jedoch vorzugsweise ein eine Einschraub-Werkzeugaufnahme aufweisender Stopfen oberhalb der Schraube in den Durchgang eingesetzt. Zur Montage des vorgefertigten Befestigungssystems, bestehend aus Halteteller, Schaft und Dübel mit eingesetzter Schraube und Stopfen, wird das Montagewerkzeug, insbesondere ein Schraubendreher, in die Einschraub-Werkzeugaufnahme des Stopfens eingesetzt. Mit der Rotation des Haltetellers teleskopiert der Mehrkantschraubkopf und damit die Schraube in dem Hubkanal nach unten, wobei gleichzeitig die Schraube in den Dübel gezogen wird und diesen aufspreizt.

Eine zweite Ausführungsform des erfindungsgemäßen Befestigungssystems unterscheidet sich von der ersten Ausführungsform dadurch, dass das Befestigungselement mit einem Teilbereich drehfest in den Schaft eingebettet ist. Der Teilbereich kann durch Formschluss und/oder Kraftschluss in den Schaft eingebettet sein.

Der Teilbereich des Befestigungselementes wird von einem komplementären Hohlraum des Schafts aufgenommen. Der Schaft des Befestigungssystems besteht insbesondere aus Kunststoff, sodass der Hohlraum zur Aufnahme des Teilbereichs durch Umspritzen des Befestigungselementes herstellbar ist.

Das Umspritzen ist eine Spritzgusstechnik, bei der ein zusammengesetzten Produkt in einem Verfahren herstellbar ist. Dazu wird der Teilbereich des Befestigungselementes, das insbesondere aus Metall oder einem anderen hitzebeständigen Material besteht, in einer Spritzgussform platziert und anschließend geschmolzenes Kunststoffmaterial in die Form injiziert, sodass das Kunststoffmaterial das Befestigungsmittel teilweise umschließt.

Das Umspritzen dient dazu, den Teilbereich des Befestigungselementes preiswert, ohne zusätzliche Montageprozesse und dauerhaft in die Kunststoffbaugruppe bestehend aus Halteteller und Schaft einzubetten. So erstreckt sich ein Teil des Befestigungselementes außerhalb des Schaftes des Befestigungssystems entlang dessen zentraler Längsachse, während der umspritzte Teilbereich für eine drehfeste Verankerung des Befestigungsmittels in dem Schaft sorgt.

Abhängig von der Art des Befestigungsmittels ist dieses form- und /oder kraftschlüssig in das Kunststoffmaterial des Schafts eingebettet. Ist beispielsweise eine kopflose Schraube, auch als Gewindestift bezeichnet, mit einem gewindelosen Teilbereich des Schraubenschaftes in den Schaft eingebettet, ist die Kraftübertragung von dem Schaft auf die Schraube kraftschlüssig.

Ist indes eine Schraube mit einem konturierten Kopf mit einem gewindelosen Teilbereich des Schraubenschaftes in den Schaft eingebettet, ist die Kraftübertragung in dem Bereich des konturierten Kopfes form- und in dem gewindelosen Teilbereich kraftschlüssig.

Um das Befestigungssystem mit der eingebetteten Schraube unmittelbar in einen Untergrund oder in einen Dübel einzuschrauben, weist das Befestigungssystem eine von der Oberseite des Haltetellers zugängliche Einschraub-Werkzeugaufnahme auf, die in dem Schaft angeordnet ist. Die Werkzeugaufnahme wird vorzugsweise ebenfalls beim Spritzgießen des Befestigungssystems in an sich bekannterweise mittels Schiebern oder beweglichen Kernen hergestellt.

Eine dritte Ausführungsform des erfindungsgemäßen Befestigungssystems unterscheidet sich von der zweiten Ausführungsform dadurch, dass das Befestigungsmittel mit der Baugruppe aus Halteteller und Schaft lösbar verbunden ist. Die Baugruppe aus Halteteller und Schaft kann preiswert im Spritzgießverfahren hergestellt werden. Die Befestigungsmittel, Schrauben mit einem Mehrkantkopf, können anschließend vom Anwender des Befestigungssystems mit der Baugruppe verbunden werden. Der Herstellungsprozess des Befestigungssystems wird durch diese Ausführungsform erheblich vereinfacht.

Zur Assemblierung des Befestigungssystems wird in der dritten Ausführungsform der Erfindung eine an den Mehrkantkopf der Schraube und einen Abschnitt des Schraubenschaftes formangepasste Aufnahme in dem Schaft vorgesehen, eingerichtet um den Mehrkantkopf und den Abschnitt des Schraubenschaftes drehfest entlang der zentralen Längsachse in dem Schaft zu befestigen, wobei der Mehrkantkopf und der Abschnitt des Schraubenschafts über eine Öffnung in der Mantelfläche des Schaftes in die Aufnahme einbringbar ist.

Um nach dem seitlichen Einbringen die Schraube unverlierbar in dem Schaft des Befestigungssystems zu halten, ist in einer vorteilhaften Ausgestaltung der Erfindung vorgesehen, dass die Öffnung in der Mantelfläche des Schaftes elastisch verformbar ist und der Mehrkantkopf und der Abschnitt des Schraubenschafts über die elastisch verformbare Öffnung in der Aufnahme einrastet. Dabei verformt sich die Öffnung der Aufnahme während des Einsetzens. Sobald Sie Schraube in der Aufnahme platziert ist, kehrt die elastisch verformbare Öffnung in ihre ursprüngliche Form zurück und arretiert die Schraube formschlüssig und drehfest in der vorgesehenen Position.

Um das Befestigungssystem nach dem Einsetzen der Schraube unmittelbar in einen Untergrund oder in einen Dübel einzuschrauben, weist das Befestigungssystem eine von der Oberseite des Haltetellers zugängliche Einschraub-Werkzeugaufnahme auf, die in dem Schaft angeordnet ist. Die Werkzeugaufnahme wird vorzugsweise ebenfalls beim Spritzgießen der Baugruppe umfassend den Halteteller und den Schaft in an sich bekannterweise mittels Schiebern oder beweglichen Kernen hergestellt.

Der Halteteller, der Schaft sowie die am Schaft und gegebenenfalls dem Halteteller angeordneten Schneidelemente sind in allen Ausführungsformen der Erfindung vorzugsweise einstückig ausgebildet und lassen sich massenhaft und preiswert im Wege des Spritzgießens herstellen. Die Schneidelemente werden insbesondere derart an dem Schaft angeordnet, dass sich die Spritzgussteile ohne Hinterschneidungen herstellen lassen.

Der Halteteller kann flach oder gewölbt ausgebildet sein. Sofern sich die Schneidelemente an der Unterseite des Haltetellers nicht bis zum Schaft erstrecken, können zusätzliche Schneiden im Übergang von dem Schaft in die Unterseite des Tellers angeordnet sein.

Der Halteteller und der Schaft sowie die angeformten Schneidelemente bestehen beispielsweise aus Polypropylen. Der Stopfen kann aus Polyamid und die Schraube aus verzinktem Stahl gefertigt werden. Durch diese Materialwahl wird eine Materialkombination geschaffen, die sowohl ausreichend korrosionsbeständig als auch in der Lage ist, den bei der Montage und dem dauerhaften Einsatz auftretenden Kräften zu widerstehen.

Das erfindungsgemäße Befestigungssystem wird vorzugsweise als Mehrfachbefestigung für die Verankerung von verklebten Wärmedämm-Verbundsystemen an einem Untergrund aus Beton, Mauerwerk oder Holz verwendet. Das erfindungsgemäße Befestigungssystem dient dabei vorzugsweise der Übertragung von Windsoglasten, wobei die Eigenlasten des Wärmedämm-Verbundsystems üblicherweise bereits von der Verklebung des Wärmedämm-Verbundsystems auf dem Untergrund aufgenommen werden.

Der Halteteller kann sowohl mit der Dämmstoffoberfläche flächenbündig als auch in den Dämmstoff versenkt montiert werden:
- Bei flächenbündiger Montage und einer Dämmstoffdicke von 60 bis 360 mm weist das Befestigungssystem vorzugsweise einen punktbezogenen Wärmedurchgangskoeffizienten von höchstens 0,002 W/K auf.
- Bei versenkter Montage und einer Dämmstoffdicke von 80 bis 380 mm weist das Befestigungssystem vorzugsweise einen punktbezogenen Wärmedurchgangskoeffizienten von höchstens 0,001 W/K auf. Bei versenkter Montage wird das Senkloch von einer nachträglich oder direkt mit dem Montagetool einzubringenden Abdeckrondelle verschlossen. Der Schraubenkopf kann in dem Hubkanal mit einem in Bezug auf die Dämmstoffoberfläche ausreichenden Abstand, beispielsweise von mehr als 50 mm, in den Dämmstoff eingebracht werden, so dass der gewünschte Wärmedurchgangskoeffizient (Chi-Wert) von 0,001 W/K erreicht werden kann.

Der Halteteller weist vorzugsweise eine Tragfähigkeit von wenigstens 2,0 kN, vorzugsweise 2,5 kN, und eine Tellersteifigkeit von wenigstens 0,5 kN, vorzugsweise > 1,0 kN, gemessen unter Durchführung der Prüfstandards ETAG 014, TA 025 (Wärmedämmung) und TA 026, auf. Hierdurch wird die Belastbarkeit des erfindungsgemäßen Befestigungssystems insbesondere im Hinblick auf die auftretenden Windsoglasten dauerhaft gewährleistet.

Die Teleskopierbarkeit erlaubt die Verwendung kürzerer Schrauben und ermöglicht zunächst ein Eindrehen der Schraube in den gesetzten Dübel, ohne dass sich der Halteteller in den Dämmstoff einschneidet.

Nachfolgend wird das erfindungsgemäße Befestigungssystem anhand der Figuren näher erläutert. Es zeigen
- **Figur 1A)**: eine Gesamtansicht eines ersten Ausführungsbeispiels eines Befestigungssystems mit einem Dübel zur Wandverankerung mit lediglich teilweise in den Dübel eingedrehter Schraube,
- **Figur 1B)**: einen Teillängsschnitt durch den Halteteller und Schaft des Befestigungssystems nach Figur 1A),
- **Figur 1C)**: das Befestigungssystem nach Figur 1A) mit vollständig in den Dübel eingedrehter Schraube,
- **Figur 1D)**: einen Teillängsschnitt durch den Halteteller und Schaft des Befestigungssystems nach Figur 1C),
- **Figur** 2: eine perspektivische Ansicht der Baueinheit aus Halteteller und Schaft,
- **Figur 2A)**: eine Detailansicht eines Schneidelementes an der unteren Stirnseite des Schaftes,
- **Figur 2B)**: eine Detailansicht eines Schneidelementes an der Mantelfläche des Schafts und dem Übergang von dem Schaft in die Unterseite des Haltetellers,
- **Figur 2C)**: eine Detailansicht eines Schneidelementes an der Unterseite des Haltetellers,
- **Figur 3 A)-C)**: in einem Wärmedämm-Verbundsystem montiertes Befestigungssystem nach Figur 1 im Zustand A) vor, B) während und C) nach Beendigung des Verschraubens,
- **Figur 4 A)-C)**: ein in einem Wärmedämm-Verbundsystem montiertes Befestigungssystem in einer Variante der Erfindung nach Figur 1 im Zustand A) vor, B) während und C)nach Beendigung des Verschraubens,
- **Figur 5A)**: eine Gesamtansicht eines zweiten Ausführungsbeispiels eines Befestigungssystems zur Wandverankerung mit eingebetteter Schraube,
- **Figur 5B)**: einen Längsschnitt durch das Befestigungssystem nach Figur 5A),
- **Figur 5C)**: eine erste perspektivische Ansicht des Befestigungssystems nach Figur 5A),
- **Figur 5D)**: eine zweite perspektivische Ansicht des Befestigungssystems nach Figur 5A),
- **Figur 5E)**: eine Detailansicht des Details C in Figur 5D),
- **Figur 6A)**: eine Gesamtansicht eines dritten Ausführungsbeispiels eines Befestigungssystems zur Wandverankerung mit eingebetteter Schraube,
- **Figur 6B)**: einen Längsschnitt durch das Befestigungssystem nach Figur 6A),
- **Figur 6C)**: eine erste perspektivische Ansicht des Befestigungssystems nach Figur 6A),
- **Figur 6D)**: eine zweite perspektivische Ansicht des Befestigungssystems nach Figur 6A),
- **Figur 6E)**: eine Detailansicht des Details B in Figur 6D).

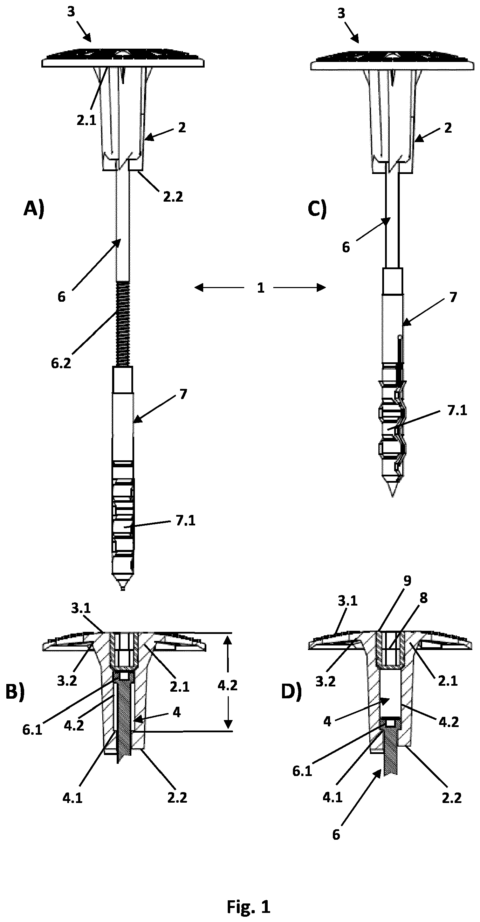

Figuren 1 A), 1C) zeigen ein vollständig vorgefertigtes Befestigungssystem 1 umfassend einen Schaft 2 mit einer oberen Stirnseite 2.1 und einer unteren Stirnseite 2.2, einen an der oberen Stirnseite 2.1 des Schaftes 2 angeordneten, rotierend antreibbaren Halteteller 3 mit einer Oberseite 3.1 und einer Unterseite 3.2.

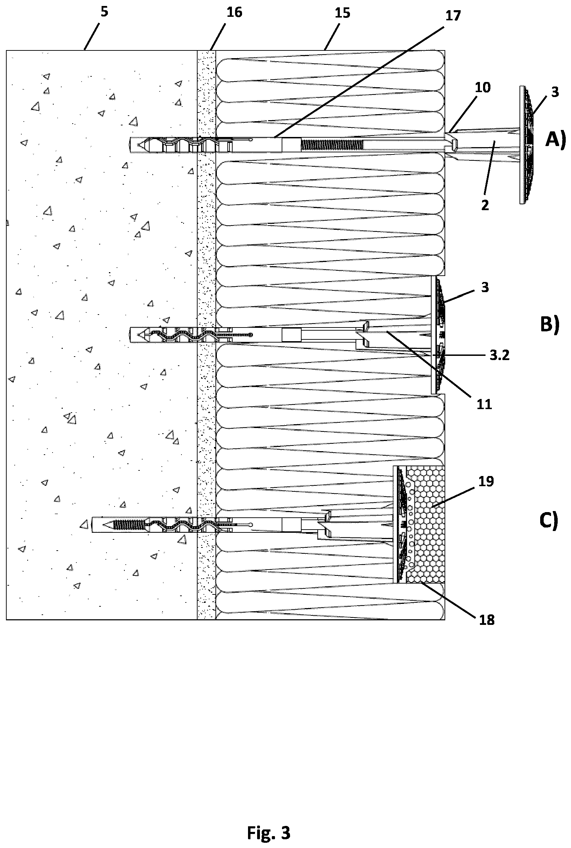

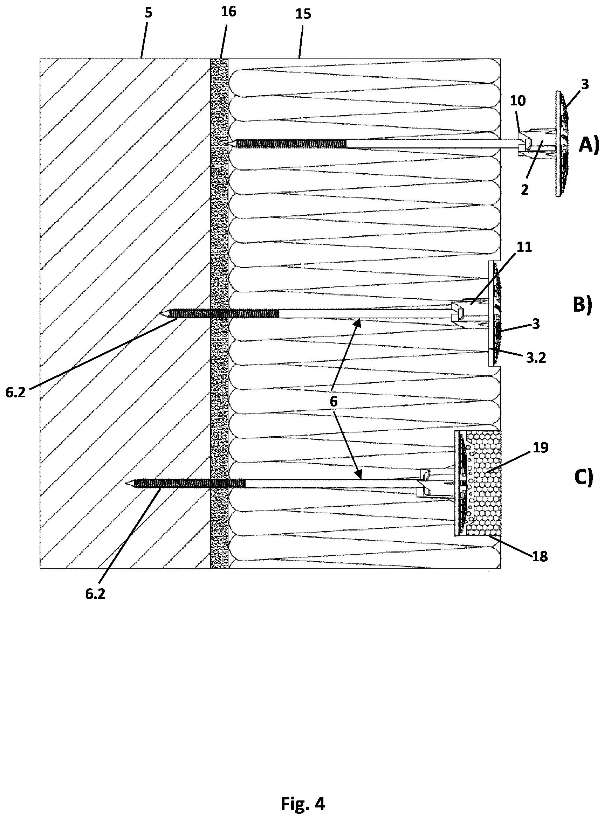

Innerhalb des Schaftes 2 und des Haltetellers 3 ist ein Durchgang 4 angeordnet, der sich von der Oberseite 3.1 des Haltetellers 3 bis zu der unteren Stirnseite 2.2 des Schaftes 2 erstreckt (vgl. Figur 1 B)). Weiter weist das Befestigungssystem 1 ein in einem tragenden Untergrund 5 (vgl. Figuren 3, 4) verankerbares Befestigungselement 6 mit einem Kopf 6.1 und einem Gewinde 6.2 auf, wobei das Befestigungselement 6 im dargestellten Ausführungsbeispiel eine Schraube 6 mit einem Vierkantkopf 6.1 ist. Die Schraube 6 ist in dem Durchgang 4 mit ihrem Vierkantkopf 6.1 bis zu einem Anschlag 4.1 in dem Durchgang 4 einbringbar. Das Gewinde 6.2 der Schraube 6 ist in Figur 1A) in einem Dübel 7 eingedreht, nicht jedoch bis zu dessen Spreizbereich 7.1.

Wie insbesondere aus den Figuren 1 B), D) erkennbar, ist ein Abschnitt des Durchgangs 4 als Hubkanal 4.2 ausgebildet. Der Hubkanal 4.2 erstreckt sich von der Oberseite 3.1 des Haltetellers 3 bis zu dem Anschlag 4.1 innerhalb des Durchgangs 4. Der Hubkanal 4.2 weist einen an den als Vierkantkopf 6.1 der Schraube 6 angepassten Querschnitt auf, sodass mit der Rotation des Haltetellers 3 der Vierkantkopf 6.1 und damit die Schraube 6 teleskopartig entlang des Hubkanals 4.2 innerhalb des Durchgangs 4 nach unten verschiebbar gelagert ist, bis der Vierkantkopf 6.1 an dem Anschlag 4.1 zur Anlage gelangt.

Oberhalb der Schraube 6 ist in dem Hubkanal 4.2 ein eine Einschraub-Werkzeugaufnahme 8 aufweisender Stopfen 9 formschlüssig eingesetzt. Zur Montage des vorgefertigten Befestigungssystems 1 wird ein Montagewerkzeug in die Einschraub-Werkzeugaufnahme 8 des Stopfens 9 eingesetzt. Mit der Rotation des Haltetellers 3 teleskopiert der Vierkantkopf 6.1 und damit die Schraube 6 in dem Hubkanal 4.2 nach unten, wie dies in Figur 1 D) dargestellt ist, bis der Vierkantkopf an dem Anschlag 4.1 zur Anlage gelangt. Gleichzeitig wird die Schraube 6 in den Dübel 7 gedreht und spreizt dabei den Spreizbereich 7.1 auf, wie dies in Figur 1 C) erkennbar ist.

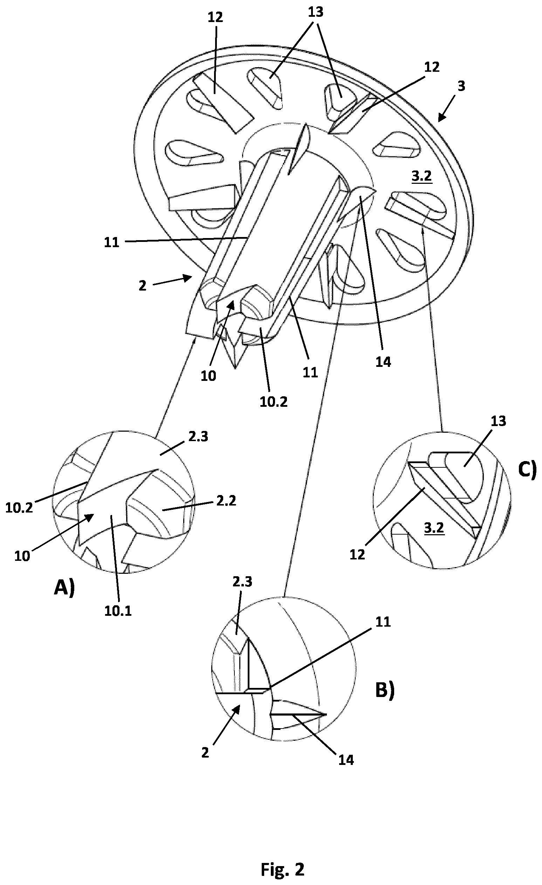

Anhand von Figur 2 wird nachfolgend die Anordnung der verschiedenen Schneidelemente 10, 11, 12 an der unteren Stirnseite 2.2 des Schafts 2, an der Mantelfläche 2.3 des Schafts 2 sowie an der Unterseite 3.2 des Haltetellers 3 näher erläutert:
Figur 2 A) zeigt eines der vier Schneidelemente 10 an der unteren Stirnseite 2.2 des Schaftes 2. Jedes Schneidelement 10 verfügt über eine geneigte Spanfläche 10.1, über die das zerspante Material abgeleitet wird, und die Freifläche 10.2, die in Vorschubrichtung des Schneidelementes 10 bei drehender Bewegung liegt. Die vier Schneidelemente 10 sind um die Austrittsöffnung des Durchgangs 4 an der unteren Stirnseite 2.2 des Schafts angeordnet.

Darüber hinaus sind an der Mantelfläche 2.3 des Schaftes 2 vier als Schneidkanten ausgebildete Schneidelemente 11 angeordnet, die sich von der unteren Stirnseite 2.2 des Schaftes 2 bis an die Unterseite 3.2 des Haltetellers 3 erstrecken. Die Schneidelemente 11 sind die sich in den Schaft 2 fortsetzenden Freiflächen 10.2 der Schneidelemente 10 an der unteren Stirnseite 2.2, wie dies insbesondere aus der perspektivischen Darstellung in Figur 3 erkennbar ist.

Weiter sind an der Unterseite 3.2 des Haltetellers 3 insgesamt fünf Schneidelemente 12 angeordnet, die sich in radialer Richtung ausgehend von dem mittig an der Unterseite des Haltetellers 3 ansetzenden Schaft 2 in Richtung des äußeren Randes des Haltetellers 3 erstrecken. Zwischen zwei benachbarten Schneidelementen 12 befinden sich jeweils zwei Durchtrittsöffnungen 13, durch die das von den Schneidelementen 10, 11, 12 zerspante Material in Richtung der Oberseite des Haltetellers 3 abtransportiert wird. Da sich die Schneidelemente 12 nicht bis zu dem Schaft 2 erstrecken, sind weitere Schneidelemente 14 am Übergang des Schafts 2 in die Unterseite 3.2 des Haltetellers 3 angeordnet.

Figur 3 A) zeigt ein in eine Bohrung 17 in dem Dämmstoff, der Kleberschicht 16 und dem tragenden Untergrund 5 eingesetztes Befestigungssystem nach Figur 1 A). In der Ausgangsposition nach Figur 3 A) befindet sich der Schaft 2 des Befestigungssystems 1 mit den Schneidelementen 10 an der unteren Stirnseite 2.2 auf der Oberfläche des Dämmstoffs 15.

Wird nun der Halteteller 3 in Drehung versetzt, beginnen die Schneidelemente 10 damit, die Bohrung 17 aufzuweiten, sodass der Schaft 2 problemlos in den Dämmstoff 15, auch wenn es sich um einen härteren Dämmstoff handelt, eindringen kann, wie dies in Figur 3 B) dargestellt ist. Die an der Mantelfläche 2.3 angeordneten Schneidelemente 11 unterstützen die Aufweitung der Bohrung 17.

Bei weiterer Drehbeaufschlagung dreht sich der Halteteller 3 zusammen mit dem Schaft 2 und der Schraube 6 weiter in den Dämmstoff 15 hinein, wobei die Schneidelemente 12 an der Unterseite des Haltetellers 3 sowie die Schneidelemente 14 an dem Übergang den Halteteller 3 in eine im Dämmstoff 15 versenkte Endlage bringen, wie dies in Figur 3 C) dargestellt ist.

Das Senkloch 8 wird durch eine Rondelle 19 verschlossen. In ihrer Endlage hat sich die Schraube 6 in dem Hubkanal 4.2 nach unten bewegt und den Spreizbereich 7.1 des Dübels 7 aufgeweitet, wie dies in Figur 3 C) erkennbar ist.

Das Befestigungssystem 1 zum Befestigen des Dämmstoffs an dem Untergrund 5 nach Figur 4 entspricht weitgehend dem Befestigungssystem 1 im Ausführungsbeispiel nach Figur 3. Unterschiede ergeben sich hinsichtlich des Untergrunds 5, der in dem dargestellten Ausführungsbeispiel unmittelbar das Einschrauben des Gewindes 6.2 der Schraube 6 in den Untergrund 5 erlaubt, weil dieser beispielsweise aus Holz besteht. Bei einem derartigen Untergrund 5 ist es nicht erforderlich, zuvor eine Bohrung 17 in den Dämmstoff 15, die Kleberschicht 16 und den Untergrund 5 einzubringen. Vielmehr schneidet sich das Befestigungssystem 1 mit dem Gewinde 6.2 der Schraube 6 und den Schneidelementen 10, 11 an der unteren Stirnseite und der Mantelfläche des Schafts den erforderlichen Hohlraum zur Aufnahme des Schafts 2 und der Schraube 6 selbst, wie dies aus Figur 4 B) erkennbar ist.

Bei weiterer Drehbeaufschlagung des Befestigungssystems 1 dreht sich der Halteteller 3 zusammen mit der Schraube 6 weiter in den Dämmstoff 15 und den Untergrund 5 hinein, bis der Halteteller 3 in dem Dämmstoff 15 versenkt ist, wie dies in Figur 4 C) dargestellt ist. Die Schneidelemente 12 an der Unterseite 3.2 des Haltetellers 3 in Verbindung mit den Schneidelementen 14 im Übergang zwischen dem Schaft 2 und der Unterseite 3.2 des Haltetellers 3 tragen das erforderliche Material zur Erstellung des Senklochs 18 ab, in das anschließend in gleicher Weise wie bei dem Ausführungsbeispiel nach Figur 3 eine Rondelle 19 eingesetzt wird.

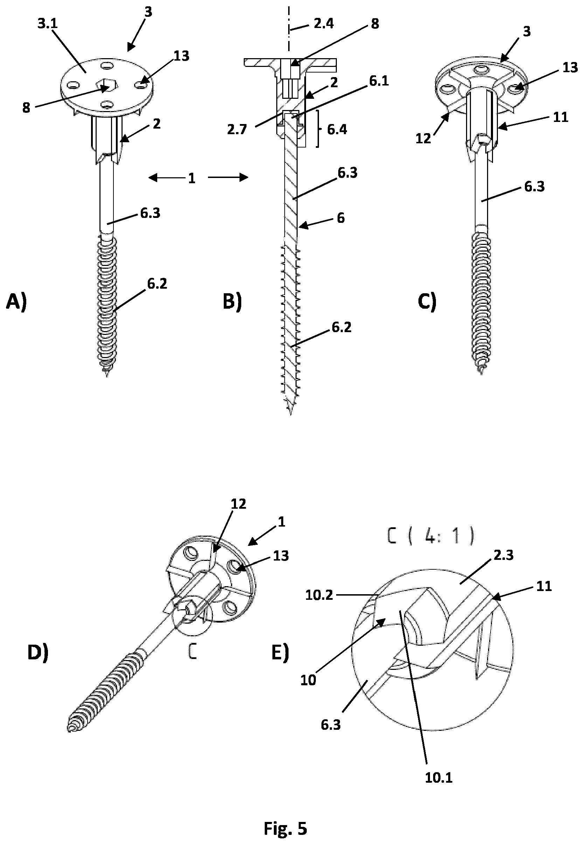

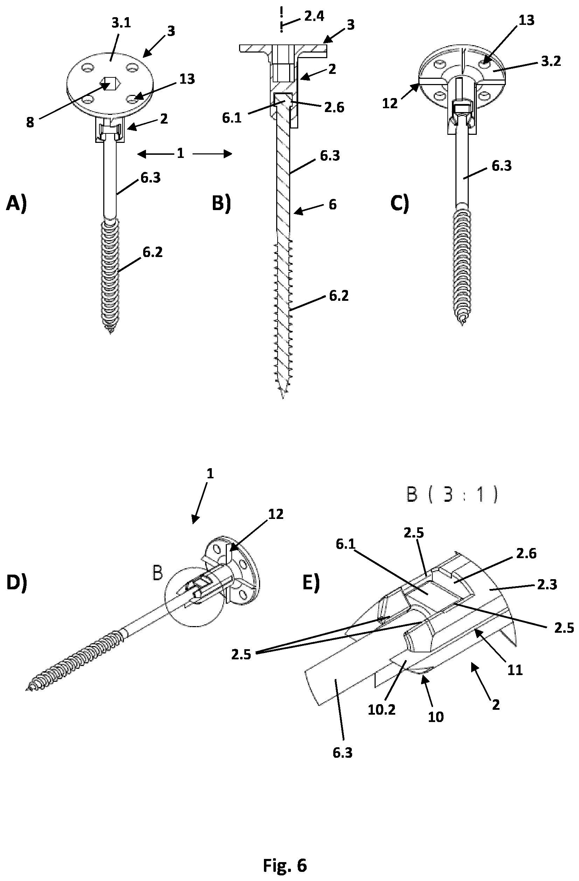

Nachfolgend werden das zweite und dritte Ausführungsbeispiel eines erfindungsgemäßen Befestigungssystems anhand der Figuren 5 und 6 näher erläutert, wobei mit dem ersten Ausführungsbeispiel übereinstimmende Komponenten der Befestigungssysteme mit übereinstimmenden Bezugszeichen bezeichnet sind.

Des Weiteren wird auf die Erläuterungen zum ersten Ausführungsbeispiel des erfindungsgemäßen Befestigungssystems hinsichtlich der Anordnung und Wirkung der Schneidelemente vollumfänglich Bezug genommen, um Wiederholungen zu vermeiden. Die Unterschiede des zweiten und dritten Ausführungsbeispiels des erfindungsgemäßen Befestigungssystems gegenüber dem ersten Ausführungsbeispiel beschränken sich auf die drehfeste Verankerung des Befestigungsmittels in der Baugruppe umfassend den Schaft und Halteteller mit den daran angeordneten Schneidelementen.

Die zweite Ausführungsform des erfindungsgemäßen Befestigungssystems 1 nach Figur 5 unterscheidet sich von der ersten Ausführungsform nach Figur 1 dadurch, dass ein Teilbereich 6.4 der Schraube 6 umfassend den Kopf 6.1 und einen gewindelosen Abschnitt des Schraubenschafts 6.3 drehfest in den Schaft 2 eingebettet ist.

Der Teilbereich 6.4 der Schraube 6 wird von einem komplementären Hohlraum 2.7 in dem Schaft 2 aufgenommen. Der Hohlraum 2.7 zur Aufnahme des Teilbereichs 6.4 wird durch Umspritzen des Teilbereichs 6.4 der Schraube 6 hergestellt.

Der Teil des Schraubenschaftes 6.3 mit dem Gewinde 6.2 erstreckt sich außerhalb des Schaftes 2 des Befestigungssystems 1 entlang der zentralen Längsachse 2.4 des Schaftes 2, während der umspritzte Teilbereich 6.4 für die drehfeste Verankerung der Schraube 6 in dem Schaft 2 sorgt. Die Kraftübertragung zwischen Schraube 6 und Schaft 2 ist in dem Bereich des Kopfes 6.1 formschlüssig und in dem sich an den Kopf 6.1 anschließenden gewindelosen Abschnitt des Schraubenschaftes 6.3 kraftschlüssig.

Um das Befestigungssystem 1 mit der umspritzen Schraube 6, unmittelbar in einen Untergrund 5 oder in einen Dübel 7 einzuschrauben, weist das Befestigungssystem 1 eine von der Oberseite 3.1 des Haltetellers 3 zugängliche Einschraub-Werkzeugaufnahme 8 auf, die in dem Schaft 2 angeordnet ist. Die Einschraub-Werkzeugaufnahme 8 ist ein Innensechskant zur Aufnahme eines Sechskantschlüssels.

Die dritte Ausführungsform des erfindungsgemäßen Befestigungssystems 1 nach Figur 6 unterscheidet sich von der ersten Ausführungsform nach Figur 1 dadurch, dass die Schraube 6 mit der Baugruppe aus Halteteller 3 und Schaft 2 lösbar verbunden ist. Die Baugruppe aus Halteteller 3 und Schaft 2 kann preiswert im Spritzgießverfahren hergestellt werden. Die Schrauben 6 mit einem Vierkantkopf 6.1 können anschließend vom Anwender des Befestigungssystems 1 mit der Baugruppe verbunden werden.

Zur Assemblierung des Befestigungssystems 1 ist in der dritten Ausführungsform der Erfindung nach Figur 6 eine an den Vierkantkopf 6.1 der Schraube 6 und einen Abschnitt des Schraubenschaftes 6.3 formangepasste Aufnahme 2.6 in dem Schaft 2 vorgesehen (vgl. Figur 6E)). Die Aufnahme 2.6 ist eingerichtet, um den Vierkantkopf 6.1 und den sich anschließenden Abschnitt des Schraubenschaftes 6.3 drehfest entlang der zentralen Längsachse 2.4 in dem Schaft 2 zu befestigen, wobei der Vierkantkopf 6.1 und der sich anschließende Abschnitt des Schraubenschafts 6.3 über eine Öffnung 2.5 in der Mantelfläche 2.3 des Schaftes 2 in die Aufnahme 2.6 einbringbar ist.

Um das Befestigungssystem 1 nach Figur 6 nach dem Einsetzen der Schraube 6 unmittelbar in einen Untergrund 5 oder in einen Dübel 7 einzuschrauben, weist das Befestigungssystem 1 eine von der Oberseite 3.1 des Haltetellers 3 zugängliche Einschraub-Werkzeugaufnahme 8 auf, die in dem Schaft 2 angeordnet ist. Die Einschraub-Werkzeugaufnahme 8 ist ein Innensechskant zur Aufnahme eines Sechskantschlüssels.

### Bezugszeichenliste

| | |
|---|---|
| 1 | Befestigungssystem |
| 2 | Schaft |
| 2.1 | Obere Stirnseite |
| 2.2 | Untere Stirnseite |
| 2.3 | Mantelfläche |
| 2.4 | Zentrale Längsachse |
| 2.5 | Öffnung |
| 2.6 | Aufnahme |
| 2.7 | Hohlraum |
| 3 | Halteteller |
| 3.1 | Oberseite |
| 3.2 | Unterseite |
| 4 | Durchgang |
| 4.1 | Anschlag |
| 4.2 | Hubkanal |
| 5 | Untergrund |
| 6 | Befestigungselement/Schraube |
| 6.1 | Kopf/Vierkantkopf |
| 6.2 | Gewinde |
| 6.3 | Schraubenschaft |
| 6.4 | Teilbereich |
| 7 | Dübel |
| 7.1 | Spreizbereich |
| 8 | Einschraub-Werkzeugaufnahme |
| 9 | Stopfen |
| 10 | Schneidelemente untere |
| 10.1 | geneigte Spanfläche |
| 10.2 | Freifläche |
| 11 | Schneidelemente Mantel |
| 12 | Schneidelemente Halteteller |
| 13 | Durchtrittsöffnungen |
| 14 | Schneidelemente Übergang |
| 15 | Dämmstoff |
| 16 | Kleberschicht |
| 17 | Bohrung |
| 18 | Senkloch |
| 19 | Rondelle |

## Patentansprüche

1. Befestigungssystem (1) für Bauteile an einem tragenden Untergrund (5), umfassend
- einen Schaft (2) mit einer oberen und einer unteren Stirnseite (2.1, 2.2),
- einen an der oberen Stirnseite (2.1) des Schaftes (2) angeordneten, rotierend antreibbaren Halteteller (3) mit einer Ober- und Unterseite (3.1, 3.2),
- einen innerhalb des Schaftes (2) und des Haltetellers (3) angeordneten Durchgang (4), der sich von der Oberseite (3.1) des Haltetellers (3) bis zu der unteren Stirnseite (2.2) des Schaftes (2) erstreckt,
- ein in dem tragenden Untergrund (5) verankerbares Befestigungselement (6) mit einem Kopf (6.1), wobei das Befestigungselement (6) in dem Durchgang (4) mit seinem Kopf (6.1) bis zu einem Anschlag (4.1) einbringbar ist,
- mindestens ein an der unteren Stirnseite (2.2) des Schaftes (2) angeordnetes Schneidelement (10), **dadurch gekennzeichnet, dass**
- an der Mantelfläche (2.3) des Schaftes (2) mindestens ein Schneidelement (11) angeordnet ist,
- das mindestens eine Schneidelement (11 ) an der Mantelfläche (2.3) sich von der unteren Stirnseite (2.2) des Schaftes (2) bis zur Unterseite (3.2) des Haltetellers (3) erstreckt und
- der Halteteller (3) mindestens eine Durchtrittsöffnung (13) aufweist, die für den Durchtritt von zerspantem Material eingerichtet ist.

2. Befestigungssystem nach Anspruch 1, **dadurch gekennzeichnet, dass** das Befestigungselement (1) als eine einen Mehrkantkopf (6.1) aufweisende Schraube (6) ausgebildet ist.

3. Befestigungssystem nach Anspruch 2, **dadurch gekennzeichnet, dass** ein als Hubkanal (4.2) ausgebildeter Abschnitt des Durchgangs (4) einen an den Mehrkantkopf (6.1) der Schraube (6) formangepassten Querschnitt aufweist, so dass mit der Rotation des Haltetellers (3) der Mehrkantkopf (6.1) und damit die Schraube (6) teleskopartig entlang des Hubkanals (4.2) innerhalb des Durchgangs (4) nach unten verschiebbar gelagert ist.

4. Befestigungssystem nach Anspruch 3, **dadurch gekennzeichnet, dass** sich der Hubkanal (4.2) von der Oberseite (3.1) des Haltetellers (3) bis zu dem Anschlag (4.1) innerhalb des Durchgangs (4) erstreckt.

5. Befestigungssystem nach Anspruch 4, **dadurch gekennzeichnet, dass** ein eine Einschraub-Werkzeugaufnahme (8) aufweisender Stopfen (9) oberhalb der Schraube (6) in den Durchgang (4) eingesetzt ist.

6. Befestigungssystem (1) für Bauteile an einem tragenden Untergrund (5), umfassend
- einen Schaft (2) mit einer oberen und einer unteren Stirnseite (2.1, 2.2),
- einen an der oberen Stirnseite (2.1) des Schaftes (2) angeordneten, rotierend antreibbaren Halteteller (3) mit einer Ober- und Unterseite (3.1, 3.2),
- eine zentrale Längsachse (2.4) des Schaftes (2), die sich von der Oberseite (3.1) des Haltetellers (3) bis zu der unteren Stirnseite (2.2) des Schaftes (2) erstreckt,
- ein in dem tragenden Untergrund (5) verankerbares Befestigungselement (6), das mit einem Teilbereich (6.4) drehfest entlang der Längsachse (2.4) in den Schaft (2) eingebettet ist,
- mindestens ein an der unteren Stirnseite (2.2) des Schaftes (2) angeordnetes Schneidelement (10), wobei
- an der Mantelfläche (2.3) des Schaftes (2) mindestens ein Schneidelement (11) angeordnet ist,
- das mindestens eine Schneidelement (11) an der Mantelfläche (2.3) sich von der unteren Stirnseite (2.2) des Schaftes (2) bis zur Unterseite (3.2) des Haltetellers (3) erstreckt und
- der Halteteller (3) mindestens eine Durchtrittsöffnung (13) aufweist, die für den Durchtritt von zerspantem Material eingerichtet ist.

7. Befestigungssystem nach Anspruch 6, **dadurch gekennzeichnet, dass** der Teilbereich des Befestigungselements (6) formschlüssig und/oder kraftschlüssig in den Schaft eingebettet ist.

8. Befestigungssystem nach Anspruch 6 oder 7, **dadurch gekennzeichnet, dass** eine von der Oberseite (3.1) des Haltetellers (3) zugängliche Einschraub-Werkzeugaufnahme (8) in dem Schaft (2) angeordnet ist.

9. Befestigungssystem (1) für Bauteile an einem tragenden Untergrund (5), umfassend
- einen Schaft (2) mit einer oberen und einer unteren Stirnseite (2.1, 2.2),
- einen an der oberen Stirnseite (2.1) des Schaftes (2) angeordneten, rotierend antreibbaren Halteteller (3) mit einer Ober- und Unterseite (3.1, 3.2),
- eine zentrale Längsachse (2.4) des Schaftes (2), die sich von der Oberseite (3.1) des Haltetellers (3) bis zu der unteren Stirnseite (2.2) des Schaftes (2) erstreckt,
- ein in dem tragenden Untergrund (5) verankerbare Schraube (6) mit einem Mehrkantkopf (6.1) und einem Schraubenschaft (6.3),
- eine an den Mehrkantkopf (6.1) der Schraube (6) und einen Abschnitt des Schraubenschaftes (6.3) formangepasste Aufnahme (2.6) in dem Schaft (2), eingerichtet um den Mehrkantkopf (6.1) und den Abschnitt des Schraubenschaftes (6.3) drehfest entlang der zentralen Längsachse (2.4) in dem Schaft (2) zu befestigen, wobei der Mehrkantkopf (6.1) und der Abschnitt des Schraubenschafts (6.3) über eine Öffnung (2.5) in der Mantelfläche (2.3) des Schaftes (2) in die Aufnahme einbringbar ist,
- mindestens ein an der unteren Stirnseite (2.2) des Schaftes (2) angeordnetes Schneidelement (10), wobei
- an der Mantelfläche (2.3) des Schaftes (2) mindestens ein Schneidelement (11) angeordnet ist,
- das mindestens eine Schneidelement (11) an der Mantelfläche (2.3) sich von der unteren Stirnseite (2.2) des Schaftes (2) bis zur Unterseite (3.2) des Haltetellers (3) erstreckt und
- der Halteteller (3) mindestens eine Durchtrittsöffnung (13) aufweist, die für den Durchtritt von zerspantem Material eingerichtet ist.

10. Befestigungssystem nach Anspruch 9, **dadurch gekennzeichnet, dass** die Öffnung (2.5) in der Mantelfläche (2.3) des Schaftes (2) elastisch verformbar ist und der Mehrkantkopf (6.1) und der Abschnitt des Schraubenschafts (6.3) über die elastisch verformbare Öffnung (2.5) in die Aufnahme (2.6) einrastet.

11. Befestigungssystem nach einem der Ansprüche 1 bis 10, **dadurch gekennzeichnet, dass** an der unteren Stirnseite (2.2) des Schaftes (2) mehrere Schneidelemente (10) angeordnet sind.

12. Befestigungssystem nach einem der Ansprüche 1 -5, **dadurch gekennzeichnet, dass** an der unteren Stirnseite (2.2) des Schaftes (2) mehrere Schneidelemente (10) um eine Austrittsöffnung des Durchgangs (4) herum angeordnet sind.

13. Befestigungssystem nach einem der Ansprüche 1 bis 12, **dadurch gekennzeichnet, dass** an der Unterseite (3.2) des Haltetellers (3) mindestens ein Schneidelement (12) angeordnet ist.

14. Befestigungssystem nach Anspruch 13, **dadurch gekennzeichnet, dass** das mindestens eine Schneidelement (12) an der Unterseite (3.2) des Haltetellers (3) in radialer Richtung ausgehend von dem mittig an der Unterseite (3.2) ansetzenden Schaft (2) angeordnet ist.

15. Befestigungssystem nach einem der Ansprüche 1 bis 14, **dadurch gekennzeichnet, dass** der Halteteller (3) und der Schaft (2) einstückig ausgebildet sind.

16. Befestigungssystem nach einem der Ansprüche 1 bis 15, **dadurch gekennzeichnet, dass** der Halteteller (3) und der Schaft (2) aus Polypropylen, der Stopfen aus Polyamid und die Schraube aus Stahl gefertigt sind.

## Claims

1. Fastening system (1) for components on a supporting base (5), comprising
- a shank (2) with an upper and a lower end face (2.1, 2.2),
- a rotatably drivable holding plate (3) arranged on the upper end face (2.1) of the shank (2) and having an upper and lower side (3.1, 3.2),
- a passage (4) arranged within the shank (2) and the holding plate (3) which extends from the upper side (3.1) of the holding plate (3) as far as the lower end face (2.2) of the shank (2),
- a fastening element (6) with a head (6.1) which can be anchored in the supporting base (5), wherein the fastening element (6) can be introduced into the passage (4) with its head (6.1) as far as a stop (4.1),
- at least one cutting element (10) arranged on the lower end face (2.2) of the shank (2), **characterized in that**
- at least one cutting element (11) is arranged on the lateral surface (2.3) of the shank (2),
- the at least one cutting element (11) on the lateral surface (2.3) extends from the lower end face (2.2) of the shank (2) as far as the lower side (3.2) of the holding plate (3) and
- the holding plate (3) has at least one passage opening (13) which is adapted for the passage of cut material.

2. Fastening system according to Claim 1, **characterized in that** the fastening element (1) is configured as a screw (6) having a polygonal head (6.1).

3. Fastening system according to Claim 2, **characterised in that** a section of the passage (4) configured as a lifting channel (4.2) has a cross-section adapted in shape to the polygonal head (6.1) of the screw (6), so that with the rotation of the holding plate (3) the polygonal head (6.1) and thus the screw (6) is mounted telescopically along the lifting channel (4.2) within the passage (4) so as to be displaceable downwards.

4. Fastening system according to Claim 3, **characterised in that** the lifting channel (4.2) extends from the upper side (3.1) of the holding plate (3) as far as the stop (4.1) within the passage (4).

5. Fastening system according to Claim 4, **characterized in that** a plug (9) having a screw-in tool receptacle (8) is inserted into the passage (4) above the screw (6).

6. Fastening system (1) for components on a supporting base (5), comprising
- a shank (2) with an upper and a lower end face (2.1, 2.2),
- a rotatably drivable holding plate (3) arranged on the upper end face (2.1) of the shank (2) and having an upper and lower side (3.1, 3.2),
- a central longitudinal axis (2.4) of the shank (2) which extends from the upper side (3.1) of the holding plate (3) as far as the lower end face (2.2) of the shank (2),
- a fastening element (6) which can be anchored in the supporting base (5), which is embedded in the shank (2) with a partial region (6.4) non-rotatably along the longitudinal axis (2.4),
- at least one cutting element (10) arranged on the lower end face (2.2) of the shank (2), wherein
- at least one cutting element (11) is arranged on the lateral surface (2.3) of the shank (2),
- the at least one cutting element (11) on the lateral surface (2.3) extends from the lower end face (2.2) of the shank (2) as far as the lower side (3.2) of the holding plate (3) and
- the holding plate (3) has at least one passage opening (13) which is adapted for the passage of cut material.

7. Fastening system according to Claim 6, **characterised in that** the partial region of the fastening element (6) is embedded positively and/or non-positively in the shank.

8. Fastening system according to Claim 6 or 7, **characterised in that** a screw-in tool receptacle (8) accessible from the upper side (3.1) of the holding plate (3) is arranged in the shank (2).

9. Fastening system (1) for components on a supporting base (5), comprising
- a shank (2) with an upper and a lower end face (2.1, 2.2),
- a rotatably drivable holding plate (3) arranged on the upper end face (2.1) of the shank (2) and having an upper and lower side (3.1, 3.2),
- a central longitudinal axis (2.4) of the shank (2) which extends from the upper side (3.1) of the holding plate (3) as far as the lower end face (2.2) of the shank (2),
- a screw (6) with a polygonal head (6.1) and a screw shank (6.3) which can be anchored in the supporting base (5),
- a receptacle (2.6) in the shank (2) which is adapted in shape to the polygonal head (6.1) of the screw (6) and a section of the screw shank (6.3) adapted to fasten the polygonal head (6.1) and the section of the screw shank (6.3) non-rotatably along the central longitudinal axis (2.4) in the shank (2), wherein the polygonal head (6.1) and the section of the screw shank (6.3) can be introduced into the receptacle via an opening (2.5) in the lateral surface (2.3) of the shank (2),
- at least one cutting element (10) arranged on the lower end face (2.2) of the shank (2), wherein
- at least one cutting element (11) is arranged on the lateral surface (2.3) of the shank (2),
- the at least one cutting element (11) on the lateral surface (2.3) extends from the lower end face (2.2) of the shank (2) as far as the lower side (3.2) of the holding plate (3) and
- the holding plate (3) has at least one passage opening (13) which is adapted for the passage of cut material.

10. Fastening system according to Claim 9, **characterized in that** the opening (2.5) in the lateral surface (2.3) of the shank (2) is elastically deformable and the polygonal head (6.1) and the section of the screw shank (6.3) engages in the receptacle (2.6) via the elastically deformable opening (2.5).

11. Fastening system according to one of Claims 1 to 10, **characterized in that** a plurality of cutting elements (10) are arranged on the lower end face (2.2) of the shank (2).

12. Fastening system according to one of Claims 1-5, **characterised in that** a plurality of cutting elements (10) are arranged on the lower end face (2.2) of the shank (2) around an outlet opening of the passage (4).

13. Fastening system according to one of Claims 1 to 12, **characterized in that** at last one cutting element (12) is arranged on the lower side (3.2) of the holding plate (3).

14. Fastening system according to Claim 13, **characterized in that** the at least one cutting element (12) is arranged on the lower side (3.2) of the holding plate (3) in the radial direction starting from the shank (2) to be placed centrally on the lower side (3.2).

15. Fastening system according to one of Claims 1 to 14, **characterized in that** the holding plate (3) and the shank (2) are formed in one piece.

16. Fastening system according to one of Claims 1 to 15, **characterized in that** the holding plate (3) and the shank (2) are made of polypropylene, the plug of polyamide and the screw of steel.

## Revendications

1. Système de fixation (1) pour des éléments de construction sur un support (5) porteur, comprenant
- une tige (2), dotée d'une face frontale (2.1, 2.2) supérieure et inférieure,
- un disque de retenue (3) placé sur la face frontale (2.1) supérieure de la tige (2), susceptible d'être entraîné en rotation, doté d'une face supérieure et inférieure (3.1, 3.2),
- un passage (4), placé à l'intérieur de la tige (2) et du disque de retenue (3), qui s'étend de la face supérieure (3.1) du disque de retenue (3) jusqu'à la face frontale (2.2) inférieure de la tige (2),
- un élément de fixation (6), ancrable dans le support (5) porteur, doté d'une tête (6.1), l'élément de fixation (6) pouvant être introduit par sa tête (6.1) dans le passage (4), jusqu'à une butée (4.1),
- au moins un élément coupant (10), placé sur la face frontale (2.2) inférieure de la tige (2),
**caractérisé en ce que**
- sur la surface enveloppante (2.3) de la tige (2) est placé au moins un élément coupant (11),
- l'au moins un élément coupant (11) s'étend sur la surface enveloppante (2.3), de la face frontale (2.2) inférieure de la tige (2) jusqu'à la face inférieure (3.2) du disque de retenue (3) et
- le disque de retenue (3) comporte au moins un orifice de passage (13), qui est configuré pour laisser passer de la matière enlevée par copeaux.

2. Système de fixation selon la revendication 1, **caractérisé en ce que** l'élément de fixation (1) est conçu sous la forme d'une vis (6) comportant une tête polygonale (6.1).

3. Système de fixation selon la revendication 2, **caractérisé en ce qu'**un tronçon du passage (4) conçu sous la forme d'un canal de course (4.2) comporte une section transversale de forme adaptée à celle de la tête polygonale (6.1) de la vis (6), de sorte qu'avec la rotation du disque de retenue (3), la tête polygonale (6.1) et ainsi la vis (6) soit logée de manière télescopiquement déplaçable vers le bas le long du canal de course (4.2), à l'intérieur du passage (4).

4. Système de fixation selon la revendication 3, **caractérisé en ce que** le canal de course (4.2) s'étend de la face supérieure (3.1) du disque de retenue (3) jusqu'à la butée (4.1), à l'intérieur du passage (4).

5. Système de fixation selon la revendication 4, **caractérisé en ce qu'**un bouchon (9) comportant un logement (8) d'outil de vissage est inséré dans le passage (4), au-dessus de la vis (6).

6. Système de fixation (1) pour des éléments de construction sur un support (5) porteur, comprenant
- une tige (2), dotée d'une face frontale (2.1, 2.2) supérieure et inférieure,
- un disque de retenue (3), placé sur la face frontale (2.1) supérieure de la tige (2), susceptible d'être entraîné en rotation, doté d'une face supérieure et inférieure (3.1, 3.2),
- un axe longitudinal (2.4) central de la tige (2), qui s'étend de la face supérieure (3.1) du disque de retenue (3) jusqu'à la face frontale (2.2) inférieure de la tige (2),
- un élément de fixation (6), ancrable dans le support (5) porteur, qui par une zone partielle (6.4) est incorporé dans la tige (2), de manière solidaire en rotation le long de l'axe longitudinal (2.4),
- au moins un élément coupant (10), placé sur la face frontale (2.2) inférieure de la tige (2),
- sur la surface enveloppante (2.3) de la tige (2) étant placé au moins un élément coupant (11),
- l'au moins un élément coupant (11) s'étendant sur la surface enveloppante (2.3), de la face frontale (2.2) inférieure de la tige (2) jusqu'à la face inférieure (3.2) du disque de retenue (3) et
- le disque de retenue (3) comportant au moins un orifice de passage (13), qui est configuré pour laisser passer de la matière enlevée par copeaux.

7. Système de fixation selon la revendication 6, **caractérisé en ce que** la zone partielle de l'élément de fixation (6) est incorporée par complémentarité de forme et / ou par complémentarité de force dans la tige.

8. Système de fixation selon la revendication 6 ou 7, **caractérisé en ce qu'**un logement (8) d'outil de vissage, accessible à partir de la face supérieure (3.l) du disque de retenue (3) est placé dans la tige (2).

9. Système de fixation (1) pour des éléments de construction sur un support (5) porteur, comprenant
- une tige (2), dotée d'une face frontale (2.1, 2.2) supérieure et inférieure,
- un disque de retenue (3), placé sur la face frontale (2.1) supérieure de la tige (2), susceptible d'être entraîné en rotation, doté d'une face supérieure et inférieure (3.1, 3.2),
- un axe longitudinal (2.4) central de la tige (2), qui s'étend de la face supérieure (3.1) du disque de retenue (3) jusqu'à la face frontale (2.2) inférieure de la tige (2),
- une vis (6), ancrable dans le support (5) porteur, dotée d'une tête polygonale (6.1) et d'une tige (6.3) de vis,
- un logement (2.6) dans la tige (2), de forme adaptée à celle de la tête polygonale (6.1) de la vis (6) et d'un tronçon de la tige (6.3) de vis, configuré pour fixer de manière solidaire en rotation le long de l'axe longitudinal (2.4) central dans la tige (2) la tête polygonale (6.1) et le tronçon de la tige (6.3) de vis, la tête polygonale (6.1) et le tronçon de la tige (6.3) de vis pouvant être introduits dans le logement par l'intermédiaire d'un orifice (2.5) dans la surface enveloppante (2.3) de la tige (2),
- au moins un élément coupant (10), placé sur la face frontale (2.2) inférieure de la tige (2),
- sur la surface enveloppante (2.3) de la tige (2) étant placé au moins un élément coupant (11),
- l'au moins un élément coupant (11) s'étendant sur la surface enveloppante (2.3), de la face frontale (2.2) inférieure de la tige (2) jusqu'à la face inférieure (3.2) du disque de retenue (3) et
- le disque de retenue (3) comportant au moins un orifice de passage (13), qui est configuré pour laisser passer de la matière enlevée par copeaux.

10. Système de fixation selon la revendication 9, **caractérisé en ce que** l'orifice (2.5) dans la surface enveloppante (2.3) de la tige (2) est élastiquement déformable et la tête polygonale (6.1) et le tronçon de la tige (6.3) de vis s'enclenche dans le logement (2.6) par l'intermédiaire de l'orifice (2.5) élastiquement déformable.

11. Système de fixation selon l'une quelconque des revendications 1 à 10, **caractérisé en ce que** sur la face frontale (2.2) inférieure de la tige (2) sont placés plusieurs éléments coupants (10).

12. Système de fixation selon l'une quelconque des revendications 1 à 5, **caractérisé en ce que** sur la face frontale (2.2) inférieure de la tige (2), plusieurs éléments coupants (10) sont placés autour d'un orifice de sortie du passage (4).

13. Système de fixation selon l'une quelconque des revendications 1 à 12, **caractérisé en ce que** sur la face inférieure (3.2) du disque de retenue (3) est placé au moins un élément coupant (12).

14. Système de fixation selon la revendication 13, **caractérisé en ce que** l'au moins un élément coupant (12) est placé sur la face inférieure (3.2) du disque de retenue (3) en partant dans la direction radiale de la tige (2) prenant naissance au centre sur la face inférieure (3.2).

15. Système de fixation selon l'une quelconque des revendications 1 à 14, **caractérisé en ce que** le disque de retenue (3) et la tige (2) sont constitués en monobloc.

16. Système de fixation selon l'une quelconque des revendications 1 à 15, **caractérisé en ce que** le disque de retenue (3) et la tige (2) sont fabriqués en polypropylène, le bouchon est fabriqué en polyamide et la vis est fabriquée en acier.
